# EUROPÄISCHE PATENTSCHRIFT

(11) **EP 3 366 896 B1**
(45) Veröffentlichungstag und Bekanntmachung des Hinweises auf die Patenterteilung: **15.12.2021**
(21) Anmeldenummer: 18157864.2
(22) Anmeldetag: 21.02.2018
(51) Int. Cl.: F01M 1/16, F01M 1/20, F01M 11/10, F01M 5/00

(54) **VERFAHREN ZUR BEWERTUNG DER SCHMIERUNG EINER MITTELS EINES SCHMIERMITTEL-KREISLAUFS SCHMIERBAREN EINRICHTUNG**
METHOD FOR EVALUATING LUBRICATION OF A DEVICE LUBRICATED BY MEANS OF LUBRICATING AGENT CIRCULATION
PROCÉDÉ D'ÉVALUATION DE LUBRIFICATION D'UN DISPOSITIF POUVANT ÊTRE LUBRIFIÉ AU MOYEN D'UN CIRCUIT D'AGENT LUBRIFIANT

(30) Priorität: 28.02.2017 DE 102017001913
(43) Veröffentlichungstag der Anmeldung: 29.08.2018
(73) Patentinhaber: MAN Truck & Bus SE, 80995 München (DE)
(72) Erfinder: Bachmann, Johannes, 90547 Stein (DE); Börner, Enrico, 91227 Leinburg (DE)
(74) Vertreter: v. Bezold & Partner Patentanwälte - PartG mbB

(56) Entgegenhaltungen:
- DE-A1-102006 034 369
- GB-A- 2 491 626
- US-A- 4 913 108
- US-A- 6 111 499

## Beschreibung

Die Erfindung betrifft Verfahren zur Bewertung der Schmierung von aneinander reibenden Reibkomponenten einer mittels eines Schmiermittel-Kreislaufs schmierbaren Einrichtung nach dem Oberbegriff der Patentansprüche 1 und 2, eine Vorrichtung zur Durchführung wenigstens eines der Verfahren nach Patentanspruch 14 sowie ein Fahrzeug, insbesondere ein Nutzfahrzeug, zur Durchführung wenigstens eines der Verfahren und/oder mit der Vorrichtung nach Patentanspruch 15.

Es ist bekannt, an einer Brennkraftmaschine mit Druckumlaufschmierung eine mechanisch von einer Kurbelwelle der Brennkraftmaschine entkoppelte, insbesondere elektrisch antreibbare, Schmiermittelpumpe vorzusehen, mittels der bei einem Startvorgang der Brennkraftmaschine bereits vor dem Anlaufen der Brennkraftmaschine ein ausreichender Schmiermitteldruck im gesamten Schmiersystem und somit eine ausreichende Befüllung sämtlicher Schmierstellen mit Schmiermittel sichergestellt werden kann. So wird einem Verschleiß der Brennkraftmaschine effektiv entgegengewirkt. Insbesondere bei Fahrzeugen mit einer sogenannten Stopp-Start-Automatik ist eine derartige mechanisch entkoppelte "vorschmierende" Schmiermittelpumpe von Vorteil, da sich bei einer Stopp-Start-Automatik die Anzahl der Startvorgänge pro Betriebsstunde regelmäßig deutlich erhöht.

Aus der DE 100 35 049 A1 ist beispielsweise ein Verfahren zum Start-Stopp-Betrieb eines Kraftfahrzeugs bekannt, bei dem das Kraftfahrzeug als Fahrantriebsquelle einen Verbrennungsmotor aufweist. Zudem weist das Fahrzeug hier mindestens eine Schmiermittelpumpe für Schmiermittel zur Schmierung von Teilen des Verbrennungsmotors und eine elektronische Start-Stopp-Steuereinrichtung auf. Die Schmierrmittelpumpe wird hier dabei in einer Stoppphase der Start-Stopp-Steuereinrichtung automatisch in Abhängigkeit vom Abschaltzeitpunkt des Verbrennungsmotors, beginnend durch einen Elektromotor angetrieben. Auf diese Weise soll Defekten an Teilen des Verbrennungsmotors einfach und wirkungsvoll entgegengewirkt werden.

Eine mit einem zusätzlichen elektrischen Antrieb antreibbare Schmiermittelpumpe ist üblicherweise kostenintensiver als eine mit einer ohnehin vorhandenen Brennkraftmaschine antreibbare Schmiermittelpumpe, so dass auch regelmäßig auf die Verwendung einer elektrisch angetriebenen Schmiermittelpumpe verzichtet wird. Um bei einem Verzicht auf eine elektrisch angetriebene Schmiermittelpumpe einen unangemessenen Verschleiß der Lager, die beim Anlaufen der Brennkraftmaschine ausschließlich mit dem vom zurückliegenden Betrieb verbliebenen Restschmiermittel geschmiert werden, zu vermeiden, ist es wichtig, dass das Schmiersystem bei einem Motorstart schnell einen ausreichend hohen Schmiermitteldruck an sämtlichen Schmierstellen aufbaut.

Für die Überwachung des Schmiermitteldrucks einer Brennkraftmaschine ist es beispielsweise bekannt, den aktuellen Schmiermitteldruck mittels eines Drucksensors zu messen und mit einem definierten Druck-Grenzwert zu vergleichen. Sofern der gemessene aktuelle Schmiermitteldruck dabei den definierten Druck-Grenzwert unterschreitet, wird üblicherweise mittels einer Warneinrichtung, beispielsweise einer Warnlampe, an einen Bediener der Brennkraftmaschine bzw. an einen Fahrer eines die Brennkraftmaschine aufweisenden Fahrzeugs ein Warnsignal ausgegeben. Ein derartiger Abgleich eines gemessenen Schmiermitteldrucks mit einem definierten Druck-Grenzwert ist jedoch nicht dafür geeignet, die Qualität des Schmiermitteldruck-Aufbaus während eines Motorstartvorgangs im vergleichsweise kurzen Zeitraum des Druckaufbaus (etwa 1 Sekunde) während des Anlaufens der Brennkraftmaschine zu bestimmen.

In US 6,111,499 A ist beispielsweise ein Warnsystem mit einem Öldruckschalter beschrieben, welcher ein Warnsignal erzeugt, wenn der Öldruck über einen festgelegten Zeitraum unter einen definierten Druck-Grenzwert fällt.

Aufgabe der Erfindung ist es daher, Verfahren zur automatisierten Bewertung der Schmierung von aneinander reibenden Reibkomponenten einer mittels eines Schmiermittel-Kreislaufs schmierbaren Einrichtung bereitzustellen, mittels denen die Schmierung der Reibkomponenten, insbesondere während eines Motorstartvorgangs, auf einfache Weise mit erhöhter Genauigkeit bewertet werden kann.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Verfahren zur Bewertung der Schmierung von aneinander reibenden Komponenten bzw. Reibkomponenten einer mittels eines Schmiermittel-Kreislaufs schmierbaren Einrichtung, insbesondere einer Brennkraftmaschine oder eines Automatikgetriebes, vorgeschlagen, wobei eine Schmiermittelpumpe des Schmiermittelkreislaufs mittels eines die Einrichtung ausbildenden Antriebsmotors oder mittels eines die Einrichtung, insbesondere ein Automatikgetriebe, antreibenden Antriebsmotors angetrieben werden kann. Erfindungsgemäß ist eine Druck-Ermittlungseinrichtung vorgesehen, mittels der während eines Motorstartvorgangs, bei dem mittels der Schmiermittelpumpe des Schmiermittelkreislaufs Schmiermitteldruck aufgebaut wird, der Schmiermitteldruck an wenigstens einem definierten Bereich bzw. Punkt des Schmiermittelkreislaufs kontinuierlich ermittelt wird. Weiter erfindungsgemäß ist eine Weg-Ermittlungseinrichtung vorgesehen, mittels der zu mehreren Druck-Zeitpunkten, an denen der mittels der Druck-Ermittlungseinrichtung ermittelte Schmiermitteldruck jeweils einen definierten Druck-Grenzwert überschreitet, der Relativweg zwischen den Reibkomponenten seit Beginn des Motorstartvorgangs ermittelt und/oder abgeschätzt wird. Zudem ist erfindungsgemäß auch eine Auswerteeinrichtung vorgesehen, mittels der aus der Summe der zu den Druck-Zeitpunkten ermittelten Relativweg-Werten ein Bewertungswert ermittelt wird, der den Schmiermitteldruck-Aufbau während des Motorstartvorgangs bewertet bzw. der die Qualität des Schmiermitteldruckaufbaus während des Motorstartvorgangs repräsentiert.

Auf diese Weise kann die Schmierung der Reibkomponenten während eines Motorstartvorgangs einfach bzw. mit geringem Aufwand mit erhöhter Genauigkeit bewertet werden, da nun aus der Relation von Schmiermitteldruck und zurückgelegtem Relativweg der Reibkomponenten zu mehreren Zeitpunkten des Motorstartvorgangs ein aussagekräftiger Bewertungswert ermittelt wird, mittels dem die Qualität des Schmiermitteldruck-Aufbaus während des Motorstartvorgangs aussagekräftig bewertet wird. Dieser, vorzugsweise skalare, Bewertungswert kann dann beispielsweise für eine spätere Auswertung des Druckaufbaus des Schmiermittel-Kreislaufs mit geringem Speicherbedarf abgespeichert oder für eine sofortige Funktionsprüfung des Schmiermittel-Kreislaufs herangezogen werden.

Zur Lösung der bereits genannten Aufgabe wird alternativ ein Verfahren zur Bewertung der Schmierung von aneinander reibenden Reibkomponenten einer mittels eines Schmiermittelkreislaufs schmierbaren Einrichtung, insbesondere einer Brennkraftmaschine oder eines Automatikgetriebes, vorgeschlagen, wobei eine Schmiermittelpumpe des Schmiermittelkreislaufs mittels eines die Einrichtung ausbildenden Antriebsmotors oder mittels eines die Einrichtung antreibenden Antriebsmotors angetrieben werden kann. Erfindungsgemäß ist eine Weg-Ermittlungseinrichtung vorgesehen, mittels der während eines Motorstartvorgangs der Relativweg zwischen den Reibkomponenten seit Beginn des Motorstartvorgangs kontinuierlich ermittelt und/oder abgeschätzt wird. Zudem ist erfindungsgemäß auch eine Druck-Ermittlungseinrichtung vorgesehen, mittels zu mehreren Weg-Zeitpunkten, an denen der mittels der Weg-Ermittlungseinrichtung ermittelte Relativweg zwischen den Reibparametern jeweils einen definierten Relativweg-Grenzwert überschreitet, der Schmiermitteldruck an wenigstens einem definierten Bereich des Schmiermittelkreislaufs ermittelt wird. Weiter erfindungsgemäß ist eine Auswerteeinrichtung vorgesehen, mittels der aus der Summe der zu den Weg-Zeitpunkten ermittelten Druckwerten ein Bewertungswert ermittelt wird, der einen Schmiermitteldruckaufbau während des Motorstartvorgangs bewertet.

Die sich durch diese alternative erfindungsgemäße Verfahrensführung ergebenden Vorteile sind identisch mit den bereits gewürdigten Vorteilen, so dass diese an dieser Stelle nicht wiederholt werden.

Des Weiteren ist die Begrifflichkeit "Motorstartvorgang" hier ausdrücklich derart zu verstehen, dass der Motorstartvorgang auch bereits den Drehbeginn der Antriebswelle des Antriebsmotors mitumfasst. Der Motorstartvorgang soll hier daher beispielsweise bei einem als Brennkraftmaschine ausgebildeten Antriebsmotor den gesamten Anlaufprozess und somit auch die Drehbetätigung der Brennkraftmaschine mittels eines Anlassers mitumfassen.

Sofern die Schmiermittelpumpe des Schmiermittel-Kreislaufs mittels eines die Einrichtung antreibenden Antriebsmotors angetrieben wird, ist es bevorzugt, wenn die zu schmierende Einrichtung durch ein Getriebe, insbesondere durch ein Automatikgetriebe, eines Fahrzeugs gebildet ist, das mittels eines Antriebsmotors des Fahrzeugs drehangetrieben wird.

In einer bevorzugten Ausgestaltung ist die Schmiermittelpumpe drehmomentübertragend mit einer Kurbelwelle einer Brennkraftmaschine als Antriebsmotor verbunden, so dass die Schmiermittelpumpe wenigstens mittels der Brennkraftmaschine drehangetrieben werden kann. Bei einer derartigen mechanisch mit der Brennkraftmaschine gekoppelten Schmiermittelpumpe ist die erfindungsgemäße Bewertung des Schmiermitteldruck-Aufbaus während eines Motorstartvorgangs besonders relevant.

In einer bevorzugten konkreten Ausgestaltung ist die Weg-Ermittlungseinrichtung durch eine Kurbelwinkel-Ermittlungseinrichtung gebildet, mittels der zur Ermittlung bzw. Abschätzung des Relativwegs zwischen den Reibkomponenten der zurückgelegte Kurbelwinkel der Kurbelwelle seit Beginn des Motorstartvorgangs ermittelt wird. Über den zurückgelegten Kurbelwinkel der Kurbelwelle kann der Relativweg zwischen den Reibkomponenten der zu schmierenden Einrichtung, beispielsweise auch zwischen den Nockenwellen und dem Zylinderkopfgehäuse einer Brennkraftmaschine als zu schmierende Einrichtung, einfach und effektiv abgeschätzt werden. Für die erfindungsgemäße Bewertung des Schmiermitteldruck-Aufbaus ist dabei regelmäßig der Bereich 0° bis 1000° zurückgelegter Kurbelwinkel seit Beginn des Motorstartvorgangs relevant. Die Kurbelwinkel-Ermittlungseinrichtung kann beispielsweise durch einen inkrementellen Kurbelwinkelgeber in Verbindung mit einer elektronischen Auswerteeinrichtung gebildet sein. Bei einer translatorischen Relativbewegung zwischen den Reibkomponenten kann der Relativweg zwischen den Reibkomponenten seit Beginn des Motorstartvorgangs beispielsweise mittels einer geeigneten Messeinrichtung direkt an den Reibkomponenten gemessen werden.

In einer bevorzugten erfindungsgemäßen Verfahrensführung wird für die Bewertung des Schmiermitteldruck-Aufbaus mittels der Auswerteeinrichtung in Abhängigkeit von der ermittelten Summe ein Bewertungswert aus einer definierten Anzahl von vorgegebenen, unterschiedlichen Bewertungsstufen bildenden Bewertungswerten ausgewählt. So kann der Schmiermitteldruck-Aufbau während des Motorstartvorgangs einfach und effektiv bewertet werden. Bevorzugt ist dabei vorgesehen, dass die Anzahl der vorgegebenen Bewertungswerte in einem Bereich von 2 bis 6 liegt. So kann der Schmiermitteldruck-Aufbau einfach und aussagekräftig bewertet werden.

Vorzugsweise liegt die Anzahl der berücksichtigten Druck-Zeitpunkte in einem Bereich von 2 bis 10 Druck-Zeitpunkte, besonders bevorzugt in einem Bereich von 3 bis 5 Druck-Zeitpunkte. Mit einer derartigen Anzahl von Druck-Zeitpunkten und somit auch von ermittelten Relativweg-Werten, die zur Ermittlung des Bewertungswerts berücksichtigt werden, kann der Schmiermitteldruck-Aufbau während des Motorstartvorgangs mit geringem Aufwand und gleichzeitig hoher Genauigkeit bewertet werden. Bei einer alternativen Verfahrensführung ist es bevorzugt, wenn die Anzahl der Weg-Zeitpunkte in einem Bereich von 2 bis 10, besonders bevorzugt in einem Bereich von 3 bis 5, liegt.

In einer weiteren bevorzugten Ausgestaltung werden die ermittelten Druckwerte bzw. die ermittelten Relativweg-Werte vor deren Summierung jeweils mittels eines Wichtungsfaktors gewichtet, wobei mittels dieser Wichtungsfaktoren die unterschiedlichen Schädigungspotentiale bzw. Schädigungswirkungen an den mehreren Weg-Zeitpunkten bzw. an den mehreren Druck-Zeitpunkten für eine Schädigung der Einrichtung durch einen zu langsamen Schmiermitteldruck-Aufbau berücksichtigt werden. Dadurch können auch nichtlineare Schädigungs-Effekte auf einfache Weise berücksichtigt und die tatsächliche Schädigung der Einrichtung durch einen zu langsamen Schmiermitteldruck-Aufbau bestimmt werden.

Besonders bevorzugt ist es, wenn der ermittelte Bewertungswert, insbesondere dauerhaft und/oder mittels eines Auslesegeräts auslesbar, in einer Speichereinrichtung der Auswerteeinrichtung abgespeichert wird. Dadurch können, beispielsweise bei einer Wartung der Einrichtung oder bei einem Schaden an der Einrichtung, die über eine Vielzahl von Motorstarts gesammelten Bewertungswerte ausgewertet und die Funktionsweise des Schmiermittel-Kreislaufs, insbesondere der Schmiermittelpumpe, überprüft werden. Die über eine Vielzahl von Motorstarts gesammelten und abgespeicherten Bewertungswerte können dabei insbesondere bei Gewährleistungsfällen relevant werden.

Vorzugsweise wird der jeweils ermittelte Bewertungswert für einen definierten Zeitraum, insbesondere für eine definierte Anzahl an Motorstarts, in der Speichereinrichtung gespeichert. Auf diese Weise kann unter Verringerung des benötigten Speicherbedarfs bei der Auswertung der gespeicherten Bewertungswerte beispielsweise ein schleichender Verschleiß der Schmiermittelpumpe zuverlässig erkannt werden. Die definierte Anzahl an Motorstarts kann dabei beispielsweise in einem Bereich von 800 bis 1500 Motorstarts, insbesondere bei etwa 1000 Motorstarts, liegen. Alternativ oder zusätzlich wird nur ein Teil der für mehrere Motorstarts ermittelten Bewertungswerte dauerhaft in der Speichereinrichtung gespeichert. So kann bei einer Langzeitspeicherung Speicherplatz effektiv eingespart werden. Dabei können die ermittelten Bewertungswerte beispielsweise nur in einem bestimmten Intervall von Motorstarts, beispielsweise nur bei jedem vierten oder fünften Motorstart, in der Speichereinrichtung abgespeichert werden.

Weiter bevorzugt werden für mehrere Motorstarts ermittelte Bewertungswerte mittels der Auswerteeinrichtung statistisch ausgewertet. Eine derartige statistische Auswertung kann dann beispielsweise für die sofortige Überprüfung der Funktionsfähigkeit des Schmiermittel-Kreislaufs verwendet werden. Bevorzugt wird mittels der Auswerteeinrichtung dabei die Häufigkeitsverteilung der für mehrere Motorstarts ermittelten Bewertungswerte, beispielsweise in Form eines Histogramms, ermittelt. Ein solches Histogramm kann beispielsweise im Schadensfall zur Entdeckung eines häufig unzureichenden Schmierdruckaufbaus als Ursache eines Motorschadens genutzt werden.

In einer weiteren bevorzugten Ausgestaltung ist die Auswerteeinrichtung signaltechnisch mit einer Warneinrichtung verbunden, mittels der in Abhängigkeit von wenigstens einem mittels der Auswerteeinrichtung ermittelten Bewertungswert selbsttätig bzw. automatisch ein, insbesondere optisches und/oder akustisches, Warnsignal an eine die Einrichtung bedienende Person, beispielsweise einen Fahrer eines die Einrichtung aufweisenden Fahrzeugs, ausgegeben wird oder nicht. So kann eine die Einrichtung bedienende Person zuverlässig über einen unzulässigen bzw. ungenügenden Schmiermitteldruck-Aufbau informiert werden. Mittels der Warneinrichtung kann dabei beispielsweise im ersten oder im Wiederholungsfall einer ungenügenden Bewertung ein Warnsignal an den Bediener ausgegeben werden. In einer einfachen und effektiven Ausgestaltung kann die Warneinrichtung dabei beispielsweise durch eine Warnlampe gebildet sein.

In einer bevorzugten konkreten Ausgestaltung ist die Druck-Ermittlungseinrichtung durch wenigstens einen Drucksensor zur Messung des Schmiermitteldrucks gebildet. Bevorzugt ist dabei vorgesehen, dass der wenigstens eine Drucksensor, in Schmiermittel-Strömungsrichtung gesehen, stromab der Schmiermittelpumpe und stromauf der zu schmierenden Reibkomponentenbereiche, insbesondere in einem definierten Nahbereich im Bereich der Schmiermittelpumpe, angeordnet ist. Mittels eines derart angeordneten Drucksensors können verlässliche Aussagen über den Aufbau des Schmiermitteldrucks getroffen werden. Alternativ oder zusätzlich kann der wenigstens eine Drucksensor bei einem als Brennkraftmaschine ausgebildeten Antriebsmotor aber auch in einem definierten Nahbereich im Bereich einer zu schmierenden Nockenwelle der Brennkraftmaschine als Reibkomponente angeordnet sein. Mittels eines derartigen Drucksensors können die Druckverhältnisse im Schmiermittel-Kreislauf besonders zuverlässig erfasst werden.

Weiter bevorzugt wird zusätzlich aus der Summe von während eines Motorabschaltvorgangs ermittelten Relativweg-Werten bzw. aus der Summe von während eines Motorabschaltvorgangs ermittelten Druckwerten mittels der Auswerteeinrichtung ein weiterer Bewertungswert ermittelt, der den Schmiermitteldruck-Abbau während des Motorabschaltvorgangs bewertet. Auf diese Weise kann die Schmierung der Reibkomponenten ebenfalls effektiv bewertet werden, da nun der Schmiermitteldruck-Abbau während eines Motorabschaltvorgangs mit geringem Aufwand und hoher Genauigkeit bewertet wird.

Die Begrifflichkeit "Motorabschaltvorgang" ist hier dabei derart zu verstehen, dass der Motorabschaltvorgang auch das Ende der Drehbewegung der Antriebswelle des Antriebsmotors mitumfasst. Der Motorabschaltvorgang soll hier daher den gesamten Auslaufprozess des Antriebsmotors mitumfassen.

Zur Lösung der bereits genannten Aufgabe wird ferner auch eine Vorrichtung zur Durchführung wenigstens eines der erfindungsgemäßen Verfahren, insbesondere für ein Fahrzeug, beansprucht, mit einem, eine Schmiermittelpumpe aufweisenden Schmiermittelkreislauf zur Schmierung einer Einrichtung, insbesondere einer Brennkraftmaschine oder eines Automatikgetriebes, wobei die Schmiermittelpumpe mittels eines die Einrichtung ausbildenden Antriebsmotors oder mittels eines die Einrichtung antreibenden Antriebsmotors angetrieben werden kann, wobei eine Druck-Ermittlungseinrichtung vorgesehen ist, mittels der während eines Motorstartvorgangs der Schmiermitteldruck an wenigstens einem definierten Bereich des Schmiermittelkreislaufs ermittelt werden kann, wobei eine Weg-Ermittlungseinrichtung vorgesehen ist, mittels der während des Motorstartvorgangs der Relativweg zwischen zu schmierenden, aneinander reibenden Reibkomponenten der Einrichtung seit Beginn des Motorstartvorgangs ermittelt und/oder abgeschätzt werden kann, wobei eine Auswerteeinrichtung vorgesehen ist, mittels der aus während des Motorstartvorgangs ermittelten Relativweg-Werten oder aus während des Motorstartvorgangs ermittelten Druckwerten ein Bewertungswert ermittelt werden kann, der den Schmiermitteldruckaufbau während des Motorstartvorgangs bewertet.

Des Weiteren wird auch ein Fahrzeug, insbesondere ein Nutzfahrzeug, zur Durchführung des erfindungsgemäßen Verfahrens und/oder mit der erfindungsgemäßen Vorrichtung beansprucht.

Die sich durch die erfindungsgemäße Vorrichtung und das erfindungsgemäße Fahrzeug ergebenden Vorteile sind identisch mit den bereits gewürdigten Vorteilen der erfindungsgemäßen Verfahren, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: eine schematische Darstellung, aus der der Aufbau einer erfindungsgemäßen Vorrichtung hervorgeht;
- Figur 2: ein Diagramm, anhand dem eine erfindungsgemäße Verfahrensführung erläutert wird;
- Figur 3: ein Ablaufdiagramm, anhand dem die Verfahrensführung erläutert wird; und
- Figur 4: in einer Darstellung gemäß Figur 3 eine zweite Ausführungsform einer erfindungsgemäßen Verfahrensführung.

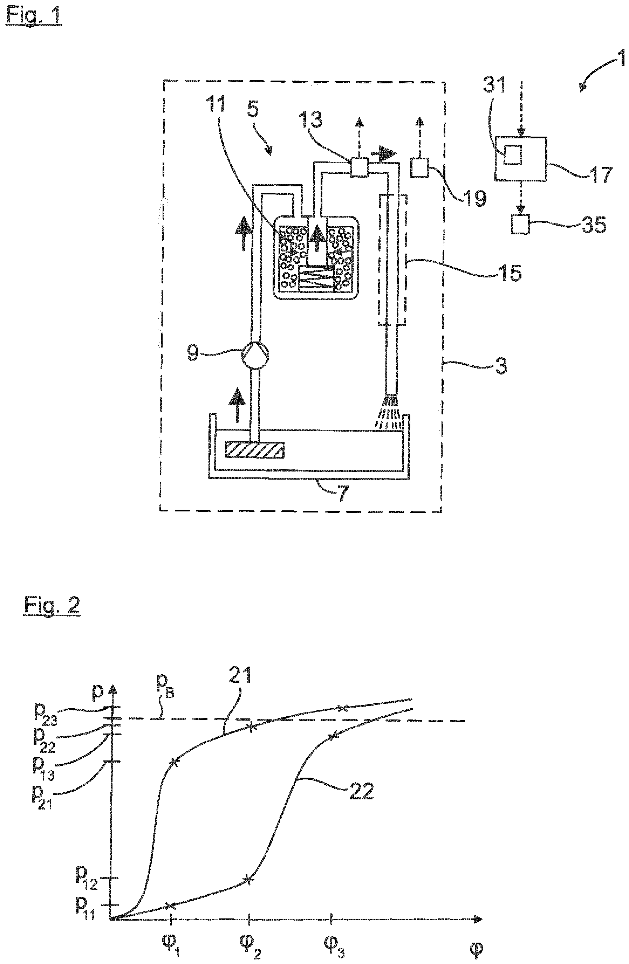

In Figur 1 ist der Aufbau einer erfindungsgemäßen Vorrichtung 1 schematisch gezeigt. Die Vorrichtung 1 weist hier beispielhaft eine mit gestrichelten Linien angedeutete Brennkraftmaschine 3 mit einem Schmiermittel-Kreislauf 5 auf. Mittels des Schmiermittel-Kreislaufs 5 werden aneinander reibende Reibkomponenten der Brennkraftmaschine 3 geschmiert, so dass der Verschleiß dieser Reibkomponenten verringert wird. Mittels des Schmiermittel-Kreislaufs 5 werden hier dabei beispielsweise die Nockenwellen, die Kurbelwellenlager, die Pleuellager, die Kolbenbolzenlager, Stößel und Kipp-/Schwinghebel der Brennkraftmaschine als Reibkomponenten geschmiert bzw. mit Schmiermittel, hier beispielhaft mit Schmieröl, versorgt.

Die Brennkraftmaschine 3 kann beispielsweise einem in den Figuren nicht gezeigten Fahrzeug zugeordnet sein, so dass die Brennkraftmaschine einen Antriebsmotor zum Antreiben des Fahrzeugs ausbildet. Alternativ könnte die Brennkraftmaschine 3 aber auch durch eine ortsfeste bzw. stationäre Brennkraftmaschine gebildet sein.

Wie in Figur 1 weiter gezeigt ist, weist der Schmiermittel-Kreislauf 5 hier, in Schmiermittel-Strömungsrichtung gesehen, eine Ölwanne 7, eine Schmiermittelpumpe 9, einen Ölfilter 11, einen Drucksensor 13 zur Messung des Öldrucks und einen mit gestrichelten Linien angedeuteten Schmierabschnitt 15 auf. Mittels der Schmiermittelpumpe 9 wird das in der Ölwanne 7 angesammelte Schmieröl aus der Ölwanne 7 gesaugt und durch den weiteren Schmiermittel-Kreislauf gefördert. Die Schmiermittelpumpe 9 ist hier dabei drehmomentübertragend mit einer in den Figuren nicht gezeigten Kurbelwelle der Brennkraftmaschine 3 verbunden, so dass die Schmiermittelpumpe 9 mittels der Brennkraftmaschine 3 drehangetrieben werden kann. In dem Schmierabschnitt 15 des Schmiermittel-Kreislaufs 5 werden die zu schmierenden Komponenten der Brennkraftmaschine 3 mit Schmiermittel versorgt.

Wie aus Figur 1 weiter hervorgeht, ist der Drucksensor 13 der Brennkraftmaschine 3 signaltechnisch mit einer Auswerteeinrichtung 17 der Vorrichtung 1 verbunden. Die Auswerteeinrichtung 17 kann beispielsweise durch ein zentrales Steuergerät zur Steuerung der Brennkraftmaschine 3 und weiterer Komponenten gebildet sein. Zudem ist die Auswerteeinrichtung 17 hier auch signaltechnisch mit einem Kurbelwinkel-Sensor 19 der Brennkraftmaschine 3 verbunden, mittels der der aktuelle Kurbelwinkel der Brennkraftmaschinen-Kurbelwelle gemessen werden kann. Mittels der an die Auswerteeinrichtung 17 übermittelten Messdaten des Drucksensors 13 und des Kurbelwinkel-Sensors 19 kann die Auswerteeinrichtung 17 Bewertungswerte ermitteln, mittels denen der Schmiermitteldruck-Aufbau während eines Motorstartvorgangs sowie auch der Schmiermitteldruck-Abbau während eines Motorabschaltvorgangs aussagekräftig bewertet werden.

In Fig. 2 ist ein Diagramm gezeigt, in das zwei Kurven 21, 22 eingetragen sind, die einen "guten" und einen "schlechten" Schmiermitteldruck-Aufbau während eines Motorstartvorgangs verdeutlichen sollen. Die Kurven 21, 22 zeigen dabei jeweils den Schmiermitteldruck p während eines Motorstartvorgangs in Abhängigkeit von dem seit Beginn des Motorstartvorgangs zurückgelegten Kurbelwinkel ϕ. Die Kurve 21 zeigt den "guten" Schmiermitteldruck-Aufbau, bei dem der Schmiermitteldruck p deutlicher schneller ansteigt als bei der Kurve 22, die den "schlechten" Schmiermitteldruck-Aufbau zeigt. Zudem ist in das Diagramm auch der Druckwert p_{B} eingetragen, der den minimalen Betriebsdruck des Schmiermittel-Kreislaufs 5 darstellen soll. Dieser kann bei einer Brennkraftmaschine beispielsweise 4 bar betragen.

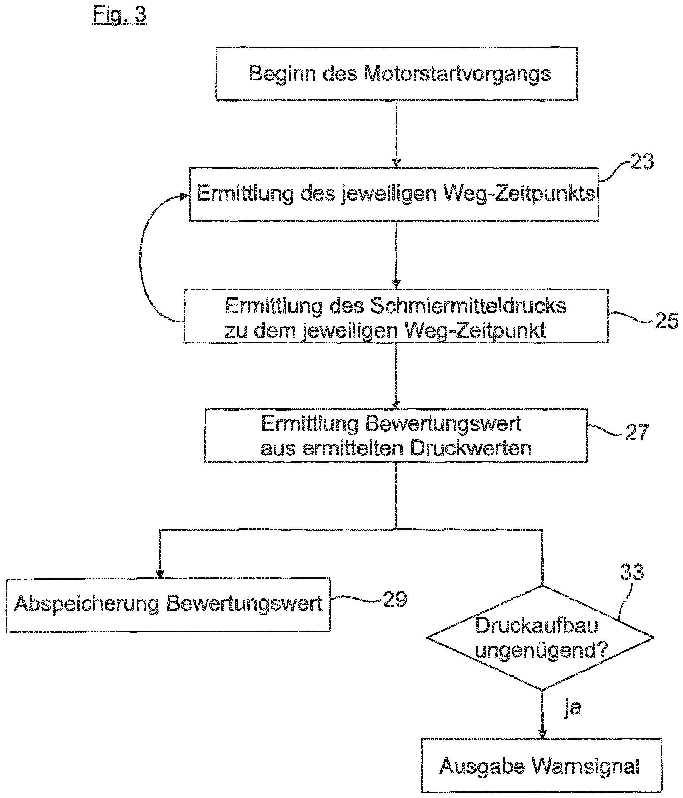

Die Ermittlung eines Bewertungswerts für die Bewertung des Schmiermitteldruck-Aufbaus während eines Motorstartvorgangs wird nachfolgend anhand von Figur 3 näher erläutert:
Bei Beginn eines Motorstartvorgangs, der beispielsweise durch Einschalten der Zündung eines die Brennkraftmaschine aufweisenden Fahrzeugs erfasst werden kann, werden der Drucksensor 13 und der Kurbelwinkelsensor 19 aktiviert, so dass der aktuelle Öldruck und der aktuelle Kurbelwinkel der Brennkraftmaschinen-Kurbelwelle kontinuierlich an die Auswerteeinrichtung 17 übermittelt werden. Über die Messdaten des Kurbelwinkelsensors 19 ermittelt die Auswerteeinrichtung 17 dann den zurückgelegten Kurbelwinkel der Brennkraftmaschinen-Kurbelwelle seit Beginn des Motorstartvorgangs. Auf diese Weise kann mittels der Auswerteeinrichtung 17 der Relativweg zwischen einer Vielzahl von aneinander reibenden Reibkomponenten der Brennkraftmaschine 3 seit Beginn des Motorstartvorgangs mit hoher Genauigkeit abgeschätzt werden.

Anschließend wird mittels der Auswerteeinrichtung 17 in einem Schritt 23 aus den Messdaten des Kurbelwinkelsensors 19 zunächst ein erster Weg-Zeitpunkt ermittelt, an dem der zurückgelegte Kurbelwinkel seit Beginn des Motorstartvorgangs einen ersten definierten Kurbelwinkel-Grenzwert ϕ₁ (Fig. 2) überschreitet. In einem folgenden Schritt 25 wird dann mittels der Auswerteeinrichtung 17 aus den Messdaten des Drucksensors 13 der Öldruck zu dem ersten Weg-Zeitpunkt ermittelt. Anschließend werden die Schritte 23, 25 wiederholt, bis alle Weg-Zeitpunkte und die zugehörigen Öldrück-Werte ermittelt sind. Insgesamt werden hier beispielhaft drei Weg-Zeitpunkte ermittelt, an denen der zurückgelegte Kurbelwinkel seit Beginn des Motorstartvorgangs jeweils einen definierten Kurbelwinkel-Grenzwert ϕ₁, ϕ₂, ϕ₃ (Fig. 2) überschreitet. Bei einem Schmiermitteldruck-Aufbau gemäß Kurve 21 der Fig. 2 werden hier dann entsprechend den drei Kurbelwinkel-Grenzwerten ϕ₁, ϕ₂, ϕ₃ die Druckwerte p₂₁, p₂₂, p₂₃ ermittelt. Bei einem Schmiermitteldruck-Aufbau gemäß Kurve 22 der Fig. 2 werden die Druckwerte p₁₁, p₁₂, p₁₃ ermittelt.

Gemäß Figur 3 wird dann in einem Schritt 27 aus der Summe der ermittelten Druckwerte der Bewertungswert zur Bewertung des Schmiermitteldruck-Aufbaus während des Motorstartvorgangs ermittelt. Konkret werden hier dabei die ermittelten Druckwerte vor deren Summierung jeweils mittels eines Wichtungsfaktors gewichtet. Mittels dieser Wichtungsfaktoren werden die unterschiedlichen Beschädigungspotentiale an den mehreren Weg-Zeitpunkten für eine Schädigung der Brennkraftmaschine 3 durch einen zu langsamen Schmiermitteldruck-Aufbau berücksichtigt. In Abhängigkeit von der Summe aus den gewichteten Druckwerten wird dann mittels der Auswerteeinrichtung 17 ein Bewertungswert aus einer definierten Anzahl von vorgegebenen, unterschiedliche Bewertungsstufen bildenden Bewertungswerten ausgewählt. Auf diese Weise wird die Qualität des Schmiermitteldruck-Aufbaus während des Motorstartvorgangs klassifiziert. Bevorzugt ist dabei vorgesehen, dass die Anzahl der Bewertungsstufen in einem Bereich von 3 bis 6 liegt. Ein hoher Summenwert der gewichteten Druckwerte führt hier dann zu einer positiveren Bewertung des Schmiermitteldruck-Aufbaus als ein niedriger Summenwert.

Anschließend wird der ermittelte Bewertungswert in einem Schritt 29 in einer Speichereinrichtung 31 der Auswerteeinrichtung 17 abgespeichert. Der Bewertungswert wird hier dabei derart abgespeichert, dass er zu einem späteren Zeitpunkt mittels eines geeigneten Auslesegeräts ausgelesen werden kann. In einem Schritt 33 wird dann zudem mittels der Auswerteeinrichtung 17 auf Basis des ermittelten Bewertungswerts überprüft, ob der Druckaufbau während des Motorstartvorgangs ungenügend bzw. unzulässig ist. Sofern dies der Fall ist, wird mittels der Auswerteeinrichtung 17 selbsttätig bzw. automatisch eine signaltechnisch mit der Auswerteeinrichtung 17 verbundene Warneinrichtung 35 (Figur 1) angesteuert. Mittels der Warneinrichtung 35 wird dann ein Warnsignal an einen Bediener der Brennkraftmaschine 3 ausgegeben. Die Warneinrichtung 35 kann dabei beispielsweise durch eine Warnlampe oder einen Lautsprecher gebildet sein.

Die Ermittlung eines Bewertungswerts zur Bewertung des Schmiermitteldruck-Abbaus während eines Motorabschaltvorgangs erfolgt auf identische Weise, wobei der Bewertungswert hier dann aus der Summe von während des Motorabschaltvorgangs ermittelten Kurbelwinkel-Werten mittels der Auswerteeinrichtung 17 ermittelt wird.

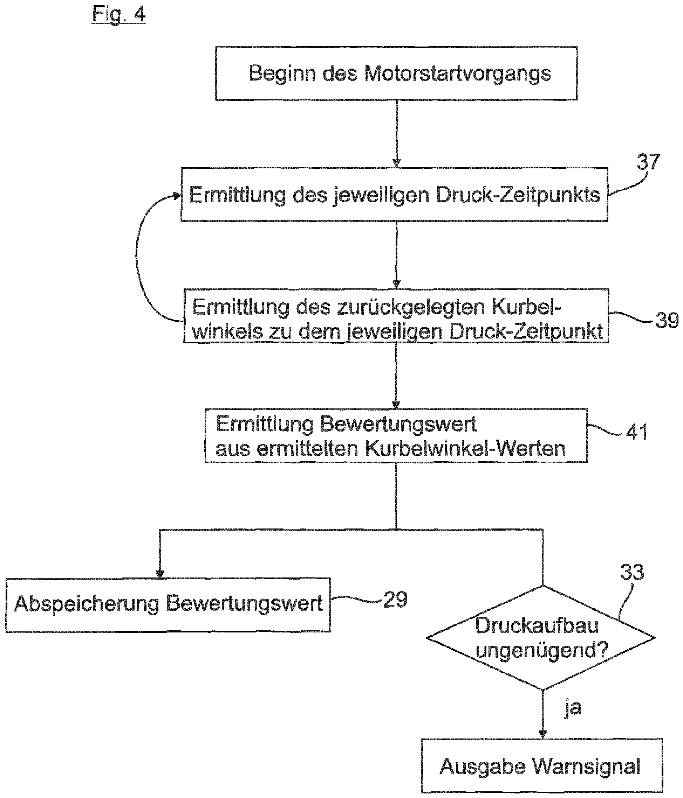

In Figur 4 ist ein Ablaufdiagramm gezeigt, anhand dem nahfolgend eine zweite Ausführungsform einer erfindungsgemäßen Verfahrensführung erläutert wird:
Im Vergleich zu der in Figur 3 gezeigten Verfahrensführung werden hier nach Beginn des Motorstartvorgangs in den Schritten 37, 39 mittels der Auswerteeinrichtung 17 aus den Messdaten des Drucksensors 13 mehrere Druck-Zeitpunkte ermittelt, an denen der mittels des Drucksensors 13 gemessene Schmiermitteldruck jeweils einen vorgegebenen definierten Druck-Grenzwert überschreitet. Zudem wird hier mittels der Auswerteeinrichtung 17 aus den Messdaten des Kurbelwinkelsensors 19 der zurückgelegte Kurbelwinkel seit Beginn des Motorstartvorgangs zu dem jeweiligen Druck-Zeitpunkt ermittelt. Anschließend wird dann in einem Schritt 41 aus der Summe der ermittelten Kurbelwinkel-Werte der Bewertungswert zur Bewertung des Schmiermitteldruck-Aufbaus während des Motorstartvorgangs ermittelt. Ein niedriger Summenwert der Kurbelwinkel-Werte führt hier dabei zu einer positiveren Bewertung des Schmiermitteldruck-Aufbaus als ein hoher Summenwert.

### Bezugszeichenliste

- 1: Vorrichtung
- 3: Brennkraftmaschine
- 5: Schmiermittel-Kreislauf
- 7: Ölwanne
- 9: Schmiermittelpumpe
- 11: Ölfilter
- 13: Drucksensor
- 15: Schmierabschnitt
- 17: Auswerteeinrichtung
- 19: Kurbelwinkelsensor
- 21: Kurve
- 22: Kurve
- 23: Schritt
- 25: Schritt
- 27: Schritt
- 29: Schritt
- 31: Speichereinrichtung
- 33: Schritt
- 35: Warneinrichtung
- 37: Schritt
- 39: Schritt
- 41: Schritt
- p: Druck
- p₁₁, p₁₂, p₁₃: Druck-Grenzwert
- p₂₁, p₂₂, p₂₃: Druck-Grenzwert
- ϕ: Kurbelwinkel
- ϕ₁, ϕ₂, ϕ₃: Kurbelwinkel-Grenzwert

## Patentansprüche

1. Verfahren zur Bewertung der Schmierung von aneinander reibenden Reibkomponenten einer mittels eines Schmiermittel-Kreislaufs (5) schmierbaren Einrichtung (3), insbesondere einer Brennkraftmaschine oder eines Automatikgetriebes, wobei eine Schmiermittelpumpe (9) des Schmiermittel-Kreislaufs (5) mittels eines die Einrichtung (3) ausbildenden Antriebsmotors oder mittels eines die Einrichtung antreibenden Antriebsmotors antreibbar ist, **dadurch gekennzeichnet,**
**dass** eine Druck-Ermittlungseinrichtung (13) vorgesehen ist, mittels der während eines Motorstartvorgangs der Schmiermitteldruck an wenigstens einem definierten Bereich des Schmiermittelkreislaufs (5) kontinuierlich ermittelt wird,
**dass** eine Weg-Ermittlungseinrichtung (19) vorgesehen ist, mittels der zu mehreren Druck-Zeitpunkten, an denen der mittels der Druck-Ermittlungseinrichtung (13) ermittelte Schmiermitteldruck jeweils einen definierten Druck-Grenzwert (p₁, p₂, p₃) überschreitet, der Relativweg zwischen den Reibkomponenten seit Beginn des Motorstartvorgangs ermittelt und/oder abgeschätzt wird, und
**dass** eine Auswerteeinrichtung (17) vorgesehen ist, mittels der aus der Summe der zu den Druck-Zeitpunkten ermittelten Relativweg-Werte (ϕ₁, ϕ₂, ϕ₃) ein Bewertungswert ermittelt wird, der den Schmiermitteldruck-Aufbau während des Motorstartvorgangs bewertet.

2. Verfahren zur Bewertung der Schmierung von aneinander reibenden Reibkomponenten einer mittels eines Schmiermittel-Kreislaufs (5) schmierbaren Einrichtung (3), insbesondere einer Brennkraftmaschine oder eines Automatikgetriebes, wobei eine Schmiermittelpumpe (9) des Schmiermittel-Kreislaufs (5) mittels eines die Einrichtung (3) ausbildenden Antriebsmotors oder mittels eines die Einrichtung antreibenden Antriebsmotors antreibbar ist, **dadurch gekennzeichnet,**
**dass** eine Weg-Ermittlungseinrichtung (19) vorgesehen ist, mittels der während eines Motorstartvorgangs der Relativweg zwischen den Reibkomponenten seit Beginn des Motorstartvorgangs kontinuierlich ermittelt und/oder abgeschätzt wird,
**dass** eine Druck-Ermittlungseinrichtung (13) vorgesehen ist, mittels der zu mehreren Weg-Zeitpunkten, an denen der mittels der Weg-Ermittlungseinrichtung (19) ermittelte Relativweg zwischen den Reibpartnern jeweils einen definierten Relativweg-Grenzwert überschreitet, der Schmiermitteldruck an wenigstens einem definierten Bereich des Schmiermittelkreislaufs (5) ermittelt wird, und
**dass** eine Auswerteeinrichtung (17) vorgesehen ist, mittels der aus der Summe der zu den Weg-Zeitpunkten ermittelten Druckwerte ein Bewertungswert ermittelt wird, der den Schmiermitteldruck-Aufbau während des Motorstartvorgangs bewertet.

3. Verfahren nach Anspruch 1 oder 2, **dadurch gekennzeichnet, dass** die Schmiermittelpumpe (9) drehmomentübertragend mit einer Kurbelwelle einer Brennkraftmaschine (3) als Antriebsmotor verbunden ist, so dass die wenigstens eine Schmiermittelpumpe (9) mittels der Brennkraftmaschine (3) drehantreibbar ist.

4. Verfahren nach Anspruch 3, **dadurch gekennzeichnet, dass** die Weg-Ermittlungseinrichtung (19) durch eine Kurbelwinkel-Ermittlungseinrichtung gebildet ist, mittels der zur Abschätzung des Relativwegs zwischen den Reibkomponenten der zurückgelegte Kurbelwinkel der Kurbelwelle seit Beginn des Motorstartvorgangs ermittelt wird.

5. Verfahren nach einem der vorhergehenden Ansprüche, **dadurch gekennzeichnet, dass** für die Bewertung des Schmiermitteldruck-Aufbaus mittels der Auswerteeinrichtung (17) in Abhängigkeit von der ermittelten Summe ein Bewertungswert aus einer definierten Anzahl von vorgegebenen, unterschiedliche Bewertungsstufen bildenden Bewertungswerten ausgewählt wird, wobei bevorzugt vorgesehen ist, dass die Anzahl der vorgegebenen Bewertungswerte in einem Bereich von 3 bis 6 Bewertungswerte liegt.

6. Verfahren nach einem der vorhergehenden Ansprüche, **dadurch gekennzeichnet, dass** die Anzahl der Druck-Zeitpunkte in einem Bereich von 2 bis 10, bevorzugt in einem Bereich von 3 bis 5, liegt, oder dass die Anzahl der Weg-Zeitpunkte in einem Bereich von 2 bis 10, bevorzugt in einem Bereich von 3 bis 5, liegt.

7. Verfahren nach einem der vorhergehenden Ansprüche, **dadurch gekennzeichnet, dass** die ermittelten Druckwerte oder die ermittelten Relativwegwerte (ϕ₁, ϕ₂, ϕ₃) vor deren Summierung jeweils mittels eines Wichtungsfaktors gewichtet werden, wobei mittels dieser Wichtungsfaktoren die unterschiedlichen Schädigungspotentiale an den mehreren Weg-Zeitpunkten oder den mehreren Druck-Zeitpunkten für eine Schädigung der Einrichtung (3) durch einen zu langsamen Schmiermitteldruck-Aufbau berücksichtigt werden.

8. Verfahren nach einem der vorhergehenden Ansprüche, **dadurch gekennzeichnet, dass** der ermittelte Bewertungswert, insbesondere dauerhaft und/oder mittels eines Auslesegeräts auslesbar, in einer Speichereinrichtung (31) der Auswerteinrichtung (17) abgespeichert wird.

9. Verfahren nach Anspruch 8, **dadurch gekennzeichnet, dass** der ermittelte Bewertungswert für einen definierten Zeitraum, insbesondere für eine definierte Anzahl an Motorstarts, in der Speichereinrichtung (31) gespeichert wird, und/oder dass nur ein Teil der für mehrere Motorstarts ermittelten Bewertungswerte dauerhaft in der Speichereinrichtung (31) gespeichert wird.

10. Verfahren nach einem der vorhergehenden Ansprüche, **dadurch gekennzeichnet, dass** die für mehrere Motorstarts ermittelten Bewertungswerte mittels der Auswerteeinrichtung (17) statistisch ausgewertet werden, wobei bevorzugt vorgesehen ist, dass mittels der Auswerteeinrichtung (17) die Häufigkeitsverteilung der für mehrere Motorstarts ermittelten Bewertungswerte, insbesondere in Form eines Histogramms, ermittelt wird.

11. Verfahren nach einem der vorhergehenden Ansprüche, **dadurch gekennzeichnet, dass** die Auswerteeinrichtung (17) signaltechnisch mit einer Warneinrichtung (35) verbunden ist, mittels der in Abhängigkeit von wenigstens einem mittels der Auswerteinrichtung (17) ermittelten Bewertungswert selbsttätig ein, insbesondere optisches und/oder akustisches, Warnsignal an eine die Einrichtung (3) bedienende Person ausgegeben wird.

12. Verfahren nach einem der vorhergehenden Ansprüche, **dadurch gekennzeichnet, dass** die Druck-Ermittlungseinrichtung (13) durch wenigstens einen Drucksensor zur Messung des Schmiermitteldrucks gebildet ist, wobei bevorzugt vorgesehen ist, dass der Drucksensor (13), in Schmiermittel-Strömungsrichtung gesehen, stromab der Schmiermittelpumpe (9) und stromauf der zu schmierenden Reibkomponentenbereich angeordnet ist.

13. Verfahren nach einem der vorhergehenden Ansprüche, **dadurch gekennzeichnet, dass** zusätzlich aus der Summe von während eines Motorabschaltvorgangs ermittelten Relativweg-Werten oder aus der Summe von während eines Motorabschaltvorgangs ermittelten Druckwerten mittels der Auswerteeinrichtung (17) ein weiterer Bewertungswert ermittelt wird, der den Schmiermitteldruck-Abbau während des Motorabschaltvorgangs bewertet.

14. Vorrichtung zur Durchführung eines Verfahrens nach einem der vorhergehenden Ansprüche, insbesondere für ein Fahrzeug, mit einem eine Schmiermittelpumpe (9) aufweisenden Schmiermittelkreislauf (5) zur Schmierung einer Einrichtung (3), insbesondere einer Brennkraftmaschine oder eines Automatikgetriebes, wobei die Schmiermittelpumpe (9) mittels eines die Einrichtung (3) ausbildenden Antriebsmotors oder mittels eines die Einrichtung antreibenden Antriebsmotors antreibbar ist,
wobei eine Druck-Ermittlungseinrichtung (13) vorgesehen ist, mittels der während eines Motorstartvorgangs der Schmiermitteldruck an wenigstens einem definierten Bereich des Schmiermittelkreislaufs (5) ermittelbar ist,
wobei eine Weg-Ermittlungseinrichtung (19) vorgesehen ist, mittels der während des Motorstartvorgangs der Relativweg zwischen zu schmierenden, aneinander reibenden Reibkomponenten der Einrichtung (3) seit Beginn des Motorstartvorgangs ermittelbar und/oder abschätzbar ist,
wobei eine Auswerteeinrichtung (17) vorgesehen ist, mittels der aus während des Motorstartvorgangs ermittelten Relativweg-Werten (ϕ₁, ϕ₂, ϕ₃) oder aus während des Motorstartvorgangs ermittelten Druckwerten ein Bewertungswert ermittelbar ist, der den Schmiermitteldruck-Aufbau während des Motorstartvorgangs bewertet.

15. Fahrzeug, insbesondere Nutzfahrzeug, mit einer Vorrichtung nach Anspruch 14.

## Claims

1. A method for evaluating the lubrication of friction components, which rub against one another, of an apparatus (3) which can be lubricated by means of a lubricant circuit (5), in particular an internal combustion engine or an automatic transmission, wherein a lubricant pump (9) of the lubricant circuit (5) is drivable by means of a drive engine forming the apparatus (3) or by means of a drive engine driving the apparatus, **characterized in that**
a pressure ascertainment unit (13) is provided, by means of which the lubricant pressure at at least one defined region of the lubricant circuit (5) is continuously ascertained during an engine start procedure,
a travel ascertainment unit (19) is provided, by means of which at multiple pressure points in time, at each of which the lubricant pressure ascertained by means of the pressure ascertainment unit (13) exceeds a defined pressure limiting value (p₁, p₂, p₃), the relative travel between the friction components since the beginning of the engine start procedure is ascertained and/or estimated, and
an analysis unit (17) is provided, by means of which an evaluation value, which evaluates the lubricant pressure buildup during the engine start procedure, is ascertained from the total of the relative travel values (ϕ₁, ϕ₂, ϕ₃) ascertained at the pressure points in time.

2. A method for evaluating the lubrication of friction components, which rub against one another, of an apparatus (3) which can be lubricated by means of a lubricant circuit (5), in particular an internal combustion engine or an automatic transmission, wherein a lubricant pump (9) of the lubricant circuit (5) is drivable by means of a drive engine forming the apparatus (3) or by means of a drive engine driving the apparatus, **characterized in that**
a travel ascertainment unit (19) is provided, by means of which the relative travel between the friction components since the beginning of the engine start procedure is continuously ascertained and/or estimated during an engine start procedure,
a pressure ascertainment unit (13) is provided, by means of which, at multiple travel points in time, at each of which the relative travel ascertained by means of the travel ascertainment unit (19) between the friction partners exceeds a defined relative travel limiting value, the lubricant pressure is ascertained at at least one defined region of the lubricant circuit (5), and
an analysis unit (17) is provided, by means of which an evaluation value, which evaluates the lubricant pressure buildup during the engine start procedure, is ascertained from the total of the pressure values ascertained at the travel points in time.

3. The method according to Claim 1 or 2, **characterized in that** the lubricant pump (9) is connected in a torque-transmitting manner to a crankshaft of an internal combustion engine (3) as the drive engine, so that the at least one lubricant pump (9) is rotationally drivable by means of the internal combustion engine (3).

4. The method according to Claim 3, **characterized in that** the travel ascertainment unit (19) is formed by a crank angle ascertainment unit, by means of which the crank angle covered by the crankshaft since the beginning of the engine start procedure is ascertained to estimate the relative travel between the friction components.

5. The method according to any one of the preceding claims, **characterized in that,** for the evaluation of the lubricant pressure buildup by means of the analysis unit (17) as a function of the ascertained total, an evaluation value is selected from a defined number of predefined evaluation values forming different evaluation levels, wherein it is preferably provided that the number of the predefined evaluation values is in a range of 3 to 6 evaluation values.

6. The method according to any one of the preceding claims, **characterized in that** the number of the pressure points in time is in a range of 2 to 10, preferably in a range of 3 to 5, or the number of the travel points in time is in a range of 2 to 10, preferably in a range of 3 to 5.

7. Method according to any one of the preceding claims, **characterized in that** the ascertained pressure values or the ascertained relative travel values (ϕ₁, ϕ₂, ϕ₃) are each weighted before the summation thereof by means of a weighting factor, wherein by means of these weighting factors, the different damage potentials at the multiple travel points in time or the multiple pressure points in time for damage of the apparatus (3) due to excessively slow lubricant pressure buildup are taken into consideration.

8. The method according to any one of the preceding claims, **characterized in that** the ascertained evaluation value is stored in a storage unit (31) of the analysis unit (17), in particular permanently and/or so it can be read out by means of a readout device.

9. The method according to Claim 8, **characterized in that** the ascertained evaluation value is stored in the storage unit (31) for a defined period of time, in particular for a defined number of engine starts, and/or only a part of the evaluation values ascertained for multiple engine starts is permanently stored in the storage unit (31).

10. The method according to any one of the preceding claims, **characterized in that** the evaluation values ascertained for multiple engine starts are statistically analysed by means of the analysis unit (17), wherein it is preferably provided that the frequency distribution of the evaluation values ascertained for multiple engine starts is ascertained, in particular in the form of a histogram, by means of the analysis unit (17).

11. The method according to any one of the preceding claims, **characterized in that** the analysis unit (17) has a signalling connection to a warning unit (35), by means of which an in particular optical and/or acoustic warning signal is independently output to a person operating the apparatus (3) as a function of at least one evaluation value ascertained by means of the analysis unit (17).

12. The method according to any one of the preceding claims, **characterized in that** the pressure ascertainment unit (13) is formed by at least one pressure sensor for measuring the lubricant pressure, wherein it is preferably provided that the pressure sensor (13), viewed in the lubricant flow direction, is arranged downstream of the lubricant pump (9) and upstream of the friction component region to be lubricated.

13. The method according to any one of the preceding claims, **characterized in that** additionally a further evaluation value, which evaluates the lubricant pressure decrease during the engine shutdown procedure, is ascertained by means of the analysis unit (17) from the total of relative travel values ascertained during an engine shutdown procedure or from the total of pressure values ascertained during an engine shutdown procedure.

14. A device for carrying out the method according to any one of the preceding claims, in particular for a vehicle, comprising a lubricant circuit (5), having a lubricant pump (9), for lubricating an apparatus (3), in particular an internal combustion engine or an automatic transmission, wherein the lubricant pump (9) is drivable by means of a drive engine forming the apparatus (3) or by means of a drive engine driving the apparatus,
wherein a pressure ascertainment unit (13) is provided, by means of which the lubricant pressure can be ascertained at at least one defined region of the lubricant circuit (5) during an engine start procedure,
wherein a travel ascertainment unit (19) is provided, by means of which the relative travel between friction components, which are to be lubricated and rub against one another, of the apparatus (3) since the beginning of the engine start procedure can be ascertained and/or estimated during the engine start procedure,
wherein an analysis unit (17) is provided, by means of which an evaluation value, which evaluates the lubricant pressure buildup during the engine start procedure, can be ascertained from relative travel values (ϕ₁, ϕ₂, ϕ₃) ascertained during the engine start procedure or from pressure values ascertained during the engine start procedure.

15. A vehicle, in particular a utility vehicle, comprising a device according to Claim 14.

## Revendications

1. Procédé d'évaluation de la lubrification de composants de friction frottant les uns contre les autres d'un dispositif (3) pouvant être lubrifié au moyen d'un circuit de lubrifiant (5), en particulier d'un moteur à combustion interne ou d'une transmission automatique, une pompe à lubrifiant (9) du circuit de lubrifiant (5) pouvant être entraînée au moyen d'un moteur d'entraînement réalisant le dispositif (3) ou au moyen d'un moteur d'entraînement entraînant le dispositif,
**caractérisé**
**en ce qu'**un dispositif de détermination de pression (13) est prévu au moyen duquel la pression de lubrifiant dans au moins une zone définie du circuit de lubrifiant (5) est déterminée en continu, pendant une opération de démarrage du moteur
**en ce qu'**un dispositif de détermination de course (19) est prévu au moyen duquel, à plusieurs instants de pression auxquels la pression de lubrifiant déterminée au moyen du dispositif de détermination de pression (13) dépasse respectivement une valeur limite de pression définie (p₁, p₂, p₃), la course relative entre les composants de friction depuis le début de l'opération de démarrage du moteur est déterminée et/ou estimée, et
**en ce qu'**un dispositif d'évaluation (17) est prévu au moyen duquel, à partir de la somme des valeurs de course relative (ϕ₁, ϕ₂, ϕ₃) déterminées aux instants de pression, une valeur d'évaluation est déterminée qui évalue la montée en pression du lubrifiant pendant l'opération de démarrage du moteur.

2. Procédé d'évaluation de la lubrification de composants de friction frottant les uns contre les autres d'un dispositif (3) pouvant être lubrifié au moyen d'un circuit de lubrifiant (5), en particulier d'un moteur à combustion interne ou d'une transmission automatique, une pompe à lubrifiant (9) du circuit de lubrifiant (5) pouvant être entraînée au moyen d'un moteur d'entraînement réalisant le dispositif (3) ou au moyen d'un moteur d'entraînement entraînant le dispositif,
**caractérisé**
**en ce qu'**un dispositif de détermination de course (19) est prévu au moyen duquel la course relative entre les composants de friction depuis le début de l'opération de démarrage du moteur est déterminée et/ou estimée en continu pendant une opération de démarrage du moteur,
**en ce qu'**un dispositif de détermination de pression (13) est prévu au moyen duquel, à plusieurs instants de course auxquels la course relative déterminée au moyen du dispositif de détermination de course (19) entre les partenaires de friction dépasse respectivement une valeur limite de course relative définie, la pression de lubrifiant est déterminée dans au moins une zone définie du circuit de lubrifiant (5), et
**en ce qu'**un dispositif d'évaluation (17) est prévu au moyen duquel, à partir de la somme des valeurs de pression déterminées aux instants de course, une valeur d'évaluation est déterminée qui évalue la montée en pression du lubrifiant pendant l'opération de démarrage du moteur.

3. Procédé selon la revendication 1 ou 2, **caractérisé en ce que** la pompe à lubrifiant (9) est reliée en transmission de couple à un vilebrequin d'un moteur à combustion interne (3) comme moteur d'entraînement de sorte que ladite au moins une pompe à lubrifiant (9) peut être entraînée en rotation au moyen du moteur à combustion interne (3).

4. Procédé selon la revendication 3, **caractérisé en ce que** le dispositif de détermination de course (19) est formé par un dispositif de détermination d'angle de vilebrequin au moyen duquel l'angle de vilebrequin du vilebrequin parcouru depuis le début de l'opération de démarrage du moteur est déterminé pour estimer la course relative entre les composants de friction.

5. Procédé selon l'une quelconque des revendications précédentes, **caractérisé en ce que** pour l'évaluation de la montée en pression du lubrifiant au moyen du dispositif d'évaluation (17), en fonction de la somme déterminée, une valeur d'évaluation est sélectionnée parmi un nombre défini de valeurs d'évaluation prédéfinies, constituant différents niveaux d'évaluation, dans lequel il est prévu de préférence que le nombre des valeurs d'évaluation prédéfinies soit compris dans une plage de 3 à 6 valeurs d'évaluation.

6. Procédé selon l'une quelconque des revendications précédentes, **caractérisé en ce que** le nombre des instants de pression est compris dans une plage de 2 à 10, de préférence dans une plage de 3 à 5, ou **en ce que** le nombre des instants de course est compris dans une plage de 2 à 10, de préférence dans une plage de 3 à 5.

7. Procédé selon l'une quelconque des revendications précédentes, **caractérisé en ce que** les valeurs de pression déterminées ou les valeurs de course relative déterminées (ϕ₁, ϕ₂, ϕ₃) sont pondérées avant leur sommation respectivement au moyen d'un facteur de pondération, dans lequel ces facteurs de pondération permettent de tenir compte des différents risques d'endommagement aux plusieurs instants de course ou aux plusieurs instants de pression pour un endommagement du dispositif (3) par une montée en pression trop lente du lubrifiant.

8. Procédé selon l'une quelconque des revendications précédentes, **caractérisé en ce que** la valeur d'évaluation déterminée est enregistrée dans un dispositif de mémoire (31) du dispositif d'évaluation (17), en particulier de manière permanente et/ou lisible au moyen d'un lecteur.

9. Procédé selon la revendication 8, **caractérisé en ce que** la valeur d'évaluation déterminée est enregistrée pendant une durée définie, en particulier pour un nombre défini de démarrages du moteur, dans le dispositif de mémoire (31), et/ou **en ce que** seule une partie des valeurs d'évaluation déterminées pour les plusieurs démarrages du moteur est enregistrée de manière permanente dans le dispositif de mémoire (31).

10. Procédé selon l'une quelconque des revendications précédentes, **caractérisé en ce que** les valeurs d'évaluation déterminées pour les plusieurs démarrages du moteur sont évaluées statistiquement au moyen du dispositif d'évaluation (17), dans lequel il est prévu de préférence que le dispositif d'évaluation (17) détermine la distribution de fréquence des valeurs d'évaluation déterminées pour les plusieurs démarrages du moteur, en particulier sous la forme d'un histogramme.

11. Procédé selon l'une quelconque des revendications précédentes, **caractérisé en ce que** le dispositif d'évaluation (17) est relié en technique de signalisation à un dispositif d'alarme (35) au moyen duquel un signal d'alarme, en particulier optique et/ou acoustique, est émis automatiquement à l'intention d'une personne actionnant le dispositif (3), en fonction d'au moins une valeur d'évaluation déterminée au moyen du dispositif d'évaluation (17).

12. Procédé selon l'une quelconque des revendications précédentes, **caractérisé en ce que** le dispositif de détermination de pression (13) est formé par au moins un capteur de pression pour mesurer la pression de lubrifiant, dans lequel il est prévu de préférence que le capteur de pression (13), vu dans la direction d'écoulement de lubrifiant, soit disposé en aval de la pompe de lubrifiant (9) et en amont de la zone de composants de friction à lubrifier.

13. Procédé selon l'une quelconque des revendications précédentes, **caractérisé en ce qu'**en plus, à partir de la somme de valeurs de course relative déterminées pendant une opération d'arrêt du moteur, ou à partir de la somme de valeurs de pression déterminées pendant une opération d'arrêt du moteur, au moyen du dispositif d'évaluation (17), une autre valeur d'évaluation est déterminée qui évalue la réduction de pression du lubrifiant pendant l'opération d'arrêt du moteur.

14. Dispositif d'exécution d'un procédé selon l'une quelconque des revendications précédentes, en particulier pour un véhicule, comprenant un circuit de lubrifiant (5) présentant une pompe à lubrifiant (9) pour lubrifier un dispositif (3), en particulier un moteur à combustion interne ou une transmission automatique, la pompe à lubrifiant (9) pouvant être entraînée au moyen d'un moteur d'entraînement réalisant le dispositif (3) ou au moyen d'un moteur d'entraînement entraînant le dispositif,
un dispositif de détermination de pression (13) étant prévu au moyen duquel la pression de lubrifiant peut être déterminée dans au moins une zone définie du circuit de lubrifiant (5) pendant une opération de démarrage du moteur,
un dispositif de détermination de course (19) étant prévu au moyen duquel la course relative entre des composants de friction du dispositif (3) à lubrifier, frottant les uns contre les autres, depuis le début de l'opération de démarrage du moteur peut être déterminée et/ou estimée pendant l'opération de démarrage du moteur,
un dispositif d'évaluation (17) étant prévu au moyen duquel, à partir de valeurs de course relative (ϕ₁, ϕ₂, ϕ₃) déterminées pendant l'opération de démarrage du moteur, ou à partir de valeurs de pression déterminées pendant l'opération de démarrage du moteur, une valeur d'évaluation peut être déterminée qui évalue la montée en pression de lubrifiant pendant l'opération de démarrage du moteur.

15. Véhicule, en particulier véhicule utilitaire, comprenant un dispositif selon la revendication 14.
